# FASCICULE DE BREVET EUROPEEN

(11) **EP 3 386 809 B1**
(45) Date de publication et mention de la délivrance du brevet: **18.08.2021**
(21) Numéro de dépôt: 16815625.5
(22) Date de dépôt: 01.12.2016
(51) Int. Cl.: B60R 25/40

(54) **DISPOSITIF DE CONTRÔLE DE L'ALIMENTATION D'UN CALCULATEUR ASSOCIÉ À UN DISPOSITIF DE TÉLÉCOMMANDE D'UN SYSTÈME**
VORRICHTUNG ZUR STEUERUNG DER VERSORGUNG EINES MIT EINER FERNBEDIENUNG EINES SYSTEMS VERKNÜPFTEN RECHNERS
DEVICE FOR CONTROLLING THE POWER SUPPLY OF A COMPUTER, ASSOCIATED WITH A REMOTE CONTROL DEVICE OF A SYSTEM

(30) Priorité: 11.12.2015 FR 1562191
(43) Date de publication de la demande: 17.10.2018
(73) Titulaire: Peugeot Motocycles SA, 25350 Mandeure (FR)
(72) Inventeur: WEI, England, 25200 Montbeliard (FR); SABATON, Jerome, 25600 Vieux Charmont (FR)
(74) Mandataire: Ménès, Catherine
(86) Numéro de dépôt international: PCT/FR2016/053162
(87) Numéro de publication internationale: WO 2017/098116

(56) Documents cités:
- EP-A1- 2 724 920
- EP-A1- 3 118 965
- WO-A1-93/02897
- DE-A1- 19 934 708
- FR-A1- 2 970 814

## Description

L'invention concerne les systèmes assurant au moins une fonction pouvant être commandée à distance par un dispositif de commande à distance (ou de télécommande) associé à calculateur.

On entend ici par « dispositif de commande à distance » tout équipement ou appareil associé à un identifiant et destiné, une fois qu'il a été enregistré (ou « appris ») dans un calculateur choisi d'un système, de commander par voie d'ondes au moins une fonction offerte par ce dernier, comme par exemple la mise en fonctionnement d'un moteur et l'arrêt de fonctionnement de ce dernier, ou le verrouillage/déverrouillage d'ouvrant(s). Par conséquent, il pourra s'agir de tout dispositif électronique nomade préalablement appris au (ou enregistré auprès du) système et permettant de verrouiller/déverrouiller des ouvrants du système et/ou son utilisation notamment pour le démarrage et l'arrêt d'un moteur du système. Ainsi, il pourra, par exemple, s'agir d'une clé électronique (ou « smart key » ou encore « plip »), d'un badge de type main libre, ou d'un équipement de communication non filaire tel qu'un téléphone mobile intelligent (ou « smartphone »).

Lorsqu'un dispositif de commande à distance (ou de télécommande) a été enregistré auprès d'un calculateur associé d'un système, ce calculateur est en permanence chargé de contrôler les échanges par voie d'ondes avec lui. Ce calculateur doit donc être alimenté de façon permanente en tension d'alimentation via un circuit d'alimentation, afin d'être en mesure de contrôler à tout moment chaque fonction commandée par le dispositif de commande à distance associé.

Lorsque le système est mis hors fonctionnement et qu'il n'est pas raccordé de façon permanente à un réseau d'alimentation électrique, il doit donc comprendre une batterie permettant de fournir la tension d'alimentation à ce calculateur, via le circuit d'alimentation. Cette fourniture participe à la décharge de la batterie, et donc cette dernière peut se retrouver totalement déchargée après une durée assez longue d'inutilisation de son système. Dans ce cas, non seulement le contrôle à distance de chaque fonction commandée ne peut plus se faire au moyen du dispositif de commande à distance associé, mais également la remise en fonctionnement du système peut s'avérer impossible.

Une telle situation peut notamment survenir dans le cas d'une motocyclette (éventuellement de type scooter) du fait des capacités de stockage relativement limitées de la batterie.

Quelques solutions ont été proposées pour réduire la consommation d'énergie électrique par le calculateur pendant les phases où son système ne fonctionne pas. C'est par exemple le cas des solutions décrites dans les documents brevet WO9302897A, US 20140176304, WO 2012141388 et FR2823167. Mais ces solutions s'avèrent insuffisantes.

L'invention a notamment pour but d'améliorer la situation.

Elle propose notamment à cet effet un dispositif de contrôle selon la revendication 1 destiné à équiper un système comprenant une batterie fournissant une tension d'alimentation à un calculateur, associé à un dispositif de commande à distance (ou de télécommande), via un circuit d'alimentation.

Ce dispositif comprend des moyens d'interruption propres à être installés en série dans le circuit d'alimentation et à être placés dans des états ouvert et fermé, respectivement interdisant et autorisant l'alimentation en tension du calculateur, en fonction d'une valeur d'une première commande reçue consécutivement à une action d'un usager sur un organe de commande équipant le système.

Grâce à l'invention, une fois que l'usager a signalé qu'il voulait mettre hors de fonctionnement le système en activant l'organe de commande, l'alimentation électrique du calculateur est totalement interrompue, ce qui empêche avantageusement ce dernier de décharger la batterie.

Le dispositif de contrôle selon l'invention peut comporter d'autres caractéristiques qui peuvent être prises séparément ou en combinaison, et notamment :
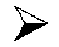 ses moyens de contrôle peuvent être propres, en cas de réception d'une troisième commande représentative d'une demande de fourniture de la tension d'alimentation et résultant d'une action par un usager sur un organe de commande du système, à générer pour les moyens d'interruption une première commande ayant une valeur représentative d'une demande de placement dans l'état fermé ;
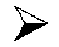 ses moyens de contrôle peuvent être propres, en cas de réception d'une deuxième commande représentative d'une demande d'arrêt de fourniture de la tension d'alimentation et résultant d'une action par un usager sur un organe de commande du système, à générer après une durée prédéfinie, pour les moyens d'interruption, une première commande ayant une valeur représentative d'une demande de placement dans l'état ouvert ;
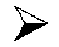 ses moyens de contrôle peuvent être propres, en cas d'inutilisation du système pendant une durée supérieure à un seuil prédéfini, à générer pour les moyens d'interruption une première commande ayant une valeur représentative d'une demande de placement dans l'état ouvert ;
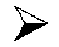 ses moyens de contrôle peuvent être implantés dans le calculateur et couplés aux moyens d'interruption via une liaison électrique ;
   - ses moyens d'interruption peuvent être agencés sous la forme d'un relai de type monostable ou de type bistable ;
   - il peut comprendre l'organe de commande.

L'invention propose également un système, éventuellement de type motocyclette, et comprenant une batterie propre à fournir une tension d'alimentation à un calculateur, associé à un dispositif de commande à distance, via un circuit d'alimentation, et un dispositif de contrôle du type de celui présenté ci-avant.

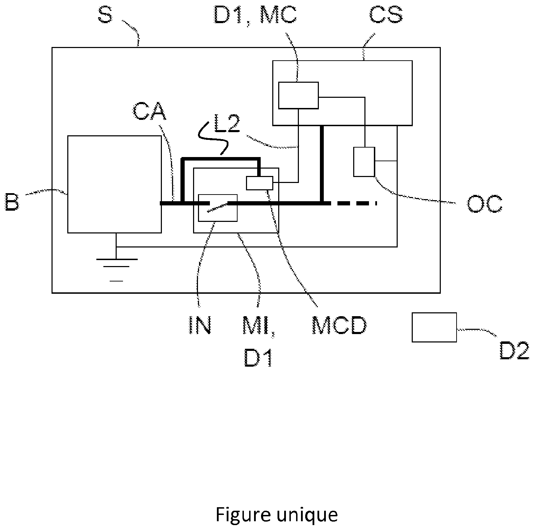

D'autres caractéristiques et avantages de l'invention apparaîtront à l'examen de la description détaillée ci-après, et du dessin annexé, sur lequel l'unique figure illustre schématiquement et fonctionnellement un système équipé d'un dispositif de contrôle selon l'invention.

L'invention a notamment pour but de proposer un dispositif de contrôle D1 destiné à équiper un système S comprenant une batterie B propre à fournir une tension d'alimentation à un calculateur CS qui est associé à un dispositif de commande à distance (ou de télécommande) D2, via un circuit d'alimentation CA.

Dans ce qui suit, on considère, à titre d'exemple non limitatif, que le système S est une motocyclette. Il s'agit par exemple d'un scooter. Mais l'invention n'est pas limitée à ce type de système. Elle concerne en effet tout type de système ayant un calculateur alimenté par une batterie et associé à un dispositif de commande à distance préalablement enregistré auprès de lui. Par conséquent, le système S pourra notamment être un véhicule, quel qu'en soit le type (terrestre, maritime (ou fluvial), ou aérien).

Par ailleurs, on considère dans ce qui suit, à titre d'exemple non limitatif, que le dispositif de commande à distance D2 est une télécommande portative définissant une clé électronique (ou smart key ou encore plip). Mais l'invention n'est pas limitée à ce type de dispositif de commande à distance. Elle concerne en effet tout équipement ou appareil associé à un identifiant et destiné, une fois qu'il a été enregistré (ou « appris ») dans un calculateur choisi d'un système, à commander par voie d'ondes au moins une fonction offerte par ce dernier, comme par exemple la mise en fonctionnement d'un moteur et l'arrêt de fonctionnement de ce dernier, ou le verrouillage/ déverrouillage d'ouvrant(s). Ainsi, il pourra également s'agir d'un badge de type main libre, ou d'un équipement de communication non filaire tel qu'un téléphone mobile intelligent (ou « smartphone »).

On a schématiquement et fonctionnellement représenté sur l'unique figure un système S (ici un scooter) comprenant une batterie B délivrant une tension dans un circuit d'alimentation CA, un calculateur CS associé à un dispositif de commande à distance D2 et alimenté en tension par le circuit d'alimentation CA, et un dispositif de contrôle D1 selon l'invention.

Dans l'exemple illustré non limitativement sur l'unique figure, le circuit d'alimentation CA alimente principalement le calculateur CS. Mais il pourrait également alimenter au moins un autre équipement ou organe électrique (ou électronique) embarqué dans le système S.

Dans l'exemple non limitatif d'un scooter S, le calculateur CS peut, par exemple, être agencé pour contrôler la mise en fonctionnement et l'arrêt de fonctionnement du scooter S, notamment en fonction des commandes reçues d'un dispositif de commande à distance D2 préalablement enregistré auprès de lui.

Ce calculateur CS comprend des moyens de communication capables d'échanger des données par voie d'ondes avec le dispositif de commande à distance D2.

Par ailleurs, ce calculateur CS peut, par exemple, être un « calculateur central » notamment chargé d'assurer l'interconnexion entre plusieurs bus de réseau(x) de communication embarqué(s) dans le système S, des fonctionnalités de diagnostic, le contrôle du fonctionnement de la batterie B et du démarreur (ou alterno-démarreur), et l'alimentation en énergie électrique des équipements électriques.

Comme illustré sur l'unique figure, un dispositif de contrôle D1, selon l'invention comprend au moins des moyens d'interruption MI.

Les moyens d'interruption MI sont propres à être installés en série dans le circuit d'alimentation CA et à être placés soit dans un état ouvert (ou non passant) interdisant l'alimentation en tension du calculateur CS, soit dans un état fermé (ou passant) autorisant l'alimentation en tension du calculateur CS, en fonction respectivement d'une valeur d'une première commande c1 reçue consécutivement à une action d'un usager sur un organe de commande OC équipant le système S.

En d'autres termes, si les moyens d'interruption MI reçoivent une première valeur v1 de la première commande c1, ils se placent dans l'état ouvert (ou non passant), tandis que si les moyens d'interruption MI reçoivent une seconde valeur v2 de la première commande c1, ils se placent dans l'état fermé (ou passant). On notera que ces valeurs v1 et v2 peuvent être de type analogique ou numérique.

Ainsi, lorsque l'usager a signalé qu'il voulait mettre hors de fonctionnement son système S (ici un scooter) en activant l'organe de commande OC, l'alimentation électrique d'au moins le calculateur CS est totalement interrompue, ce qui empêche ce dernier (CS) de décharger la batterie B.

On notera, comme illustré non limitativement sur l'unique figure, que le dispositif de contrôle D1 peut également comprendre des moyens de contrôle MC propres, lorsqu'ils ont reçu une deuxième commande c2 représentative d'une demande d'arrêt de fourniture de la tension d'alimentation et résultant de l'action de l'usager sur l'organe de commande OC, à générer pour les moyens d'interruption MI une première commande c1 ayant la première valeur v1 (représentative d'une demande de placement dans l'état ouvert).

De tels moyens de contrôle MC peuvent être éventuellement propres, lorsqu'ils ont reçu une deuxième commande c2 (représentative d'une demande d'arrêt de fourniture de la tension d'alimentation et résultant d'une action par l'usager sur l'organe de commande OC), à générer après une durée (de temporisation) prédéfinie, pour les moyens d'interruption MI, une première commande c1 ayant une première valeur v1 représentative de la demande de placement dans l'état ouvert. Cela permet avantageusement d'éviter que l'alimentation électrique du calculateur CS soit immédiatement interrompue, de sorte que l'usager puisse encore l'utiliser pendant la durée (de temporisation) prédéfinie en cas de changement d'avis ou de besoin (par exemple pour déclencher une fonction d'alerte (ou « warning »)).

Par exemple, cette durée prédéfinie peut être comprise entre 5 secondes et une heure. Cette durée prédéfinie peut éventuellement, dépendre d'un règlement national ou international en vigueur.

Par ailleurs, cette deuxième commande c2 peut être de type analogique ou numérique.

L'organe de commande OC peut, par exemple, être dédié à la signalisation d'une demande d'arrêt de fourniture de la tension d'alimentation du calculateur CS ou bien d'un groupe d'organes électriques du système S (par exemple ceux dont la mise en état de veille n'est pas une obligation). Ainsi, il peut, par exemple, s'agir de l'organe de commande que l'usager doit actionner pour démarrer son scooter S. D'une manière générale, un tel organe de commande OC peut, par exemple, être un bouton poussoir ou un levier ou une option dédiée à sélectionner dans un menu affiché sur un écran du système S et de préférence à accès direct.

On notera que l'on peut éventuellement envisager que l'activation de plusieurs organes de commande associés à des fonctions différentes induise la génération d'une deuxième commande c2.

On notera également que les moyens de contrôle MC peuvent être éventuellement propres, lorsqu'ils ont reçu une troisième commande c3 représentative d'une demande de fourniture de la tension d'alimentation et résultant d'une action par l'usager sur un organe de commande du système S, à générer pour les moyens d'interruption Ml une première commande c1 ayant la seconde valeur v2 représentative d'une demande de placement dans l'état fermé.

Le dernier organe de commande peut, par exemple, être le même que celui qui est utilisé pour générer la deuxième commande c2, du fait que cette dernière (C2) signale une demande d'arrêt de fourniture de la tension d'alimentation du calculateur CS ou bien d'un groupe d'organes électriques du système, alors que la troisième commande c3 signale une demande de fourniture de la tension d'alimentation au calculateur CS ou bien à un groupe d'organes électriques du système S. Mais dans une variante il pourrait s'agir d'un organe de commande différent de celui utilisé pour générer la deuxième commande c2. Dans ce dernier cas, il peut, par exemple, s'agir d'un bouton poussoir ou d'un levier ou d'une option dédiée à sélectionner dans un menu affiché sur un écran du système S et de préférence à accès direct.

Cette troisième commande c3 peut être de type analogique ou numérique.

On notera également que les moyens de contrôle MC peuvent être éventuellement propres, en cas d'inutilisation du système S pendant une durée supérieure à un seuil prédéfini, à générer pour les moyens d'interruption Ml une première commande c1 ayant une première valeur représentative d'une demande de placement dans l'état ouvert. Cette option est destinée à éviter que l'alimentation électrique du calculateur CS soit immédiatement interrompue, pour permettre à l'usager de l'utiliser pendant la durée du seuil prédéfini en cas de changement d'avis ou de besoin (par exemple pour déclencher une fonction d'alerte (ou « warning »)).

Par exemple, la durée de ce seuil prédéfini peut être comprise entre 5 secondes et une heure. Cette durée du seuil prédéfini peut, éventuellement, dépendre d'un règlement national ou international en vigueur.

Dans l'exemple illustré non limitativement sur l'unique figure, les moyens de contrôle MC sont implantés dans le calculateur CS et sont couplés aux moyens d'interruption MI via une liaison électrique L2. Mais ils pourraient être externes au calculateur CS et couplés à l'organe de commande OC via une liaison électrique et aux moyens d'interruption MI via une autre liaison électrique. Ils pourraient également faire partie de l'organe de commande OC.

Dans une variante de réalisation non illustrée, et de conception moins sophistiquée que celle illustrée et décrite ci-avant, on pourrait se passer de moyens de contrôle MC. Dans ce cas, l'organe de commande OC pourrait être couplés aux moyens d'interruption MI via une liaison électrique L2, de sorte que ce soit lui (OC) qui génère pour les moyens d'interruption MI une première commande c1 ayant la première valeur v1 lorsque son actionnement est représentatif d'une demande de placement dans l'état ouvert. Il peut alors également générer pour les moyens d'interruption MI une première commande c1 ayant la seconde valeur v2 lorsque son actionnement est représentatif d'une demande de placement dans l'état fermé.

On notera également que les moyens d'interruption MI peuvent, par exemple et comme illustré non limitativement, comprendre un interrupteur IN installé en série dans le circuit d'alimentation CA relié à la batterie BA et pouvant être placés dans l'état ouvert ou l'état fermé, et des moyens de commande MCD couplés par la liaison électrique L2 aux moyens de contrôle MC et au circuit d'alimentation CA en amont de l'interrupteur IN et propres à placer ce dernier (IN) dans son état ouvert ou son état fermé en fonction de la valeur v1 ou v2 de la première commande c1 reçue.

Dans ce cas, les moyens d'interruption MI peuvent, par exemple, être agencés sous la forme d'un relai de type monostable. Un tel relai monostable doit recevoir la seconde valeur v2 de façon constante pour qu'il demeure dans son état fermé, et l'arrêt d'envoi de la seconde valeur v2, est interprété comme une première valeur v1 qui déclenche le passage dans l'état ouvert. Ce mode de réalisation est difficilement compatible avec la variante de réalisation décrite dans le paragraphe précédent.

En variante, les moyens d'interruption MI peuvent, par exemple, être agencés sous la forme d'un relai de type bistable. Dans ce cas, le relai bistable passe de son état ouvert à son état fermé en cas de réception d'une première valeur v1, et passe de son état fermé à son état ouvert en cas de réception d'une seconde valeur v2 différente de la première valeur v1.

Le relai monostable est plus facile à intégrer dans un petit système tel qu'un scooter, mais induit une consommation permanente d'énergie lorsqu'il est dans son état fermé. Le relai bistable est moins facile à intégrer dans un petit système tel qu'un scooter, mais n'induit pas de consommation d'énergie entre deux changements d'état.

Les moyens d'interruption MI peuvent être placés en état fermé, en établissant un circuit électrique qui part d'une borne de la batterie B A vers le circuit d'alimentation CA, qui se poursuit vers les moyens de contrôle MC via la liaison électrique L2 en amont de l'interrupteur IN (ladite liaison L2 pouvant reliée éventuellement les moyens de contrôle MCD aux moyens de contrôle MC), qui se prolonge en sortie des moyens de contrôle MC vers l'organe de commande OC qui est relié à la masse du système S, commune à la batterie BA.

L'invention offre plusieurs avantages, parmi lesquels :
- l'arrêt de la consommation d'énergie électrique du calculateur lorsque le système n'est pas utilisé (éventuellement après une durée de temporisation),
- l'éventuelle possibilité d'arrêter également la consommation d'énergie électrique de la batterie par d'autres organes électriques lorsque le système n'est pas utilisé (éventuellement après une durée de temporisation),

- la conservation de l'état de charge de la batterie, ce qui évite d'accélérer son vieillissement,
- l'éventuelle possibilité de sous-dimensionner la capacité de la batterie tant que la puissance délivrée pour le démarrage de l'éventuel moteur demeure suffisante.

## Revendications

1. Dispositif de contrôle (D1) pour un calculateur (CS) associé à un dispositif de commande à distance (D2) d'un système (S) comprenant une batterie (B) propre à fournir une tension d'alimentation audit calculateur (CS) via un circuit d'alimentation (CA), le dispositif comprenant des moyens d'interruption (MI) propres à être installés en série dans ledit circuit d'alimentation (CA) et à être placés dans des états ouvert et fermé, respectivement interdisant et autorisant l'alimentation en tension dudit calculateur (CS), en fonction d'une valeur d'une première commande reçue consécutivement à une action d'un usager sur un organe de commande (OC) équipant ledit système (S), **caractérisé en ce que** le dispositif comprend des moyens de contrôle (MC) propres, en cas de réception d'une deuxième commande représentative d'une demande d'arrêt de fourniture de ladite tension d'alimentation et résultant de ladite action de l'usager sur ledit organe de commande (OC), à générer pour lesdits moyens d'interruption (MI) une première commande ayant une valeur représentative d'une demande de placement dans ledit état ouvert.

2. Dispositif selon la revendication 1, **caractérisé en ce que** lesdits moyens de contrôle (MC) sont propres, en cas de réception d'une troisième commande représentative d'une demande de fourniture de ladite tension d'alimentation et résultant d'une action par un usager sur un organe de commande (OC) dudit système (S), à générer pour lesdits moyens d'interruption (MI) une première commande ayant une valeur représentative d'une demande de placement dans ledit état fermé.

3. Dispositif selon l'une des revendications 1 et 2, **caractérisé en ce que** lesdits moyens de contrôle (MC) sont propres, en cas de réception d'une deuxième commande représentative d'une demande d'arrêt de fourniture de ladite tension d'alimentation et résultant d'une action par un usager sur un organe de commande (OC) dudit système (S), à générer après une durée prédéfinie, pour lesdits moyens d'interruption (MI), une première commande ayant une valeur représentative d'une demande de placement dans ledit état ouvert.

4. Dispositif selon l'une des revendications 1 à 3, **caractérisé en ce que** lesdits moyens de contrôle (MC) sont propres, en cas d'inutilisation dudit système (S) pendant une durée supérieure à un seuil prédéfini, à générer pour lesdits moyens d'interruption (MI) une première commande ayant une valeur représentative d'une demande de placement dans ledit état ouvert.

5. Dispositif selon l'une des revendications 1 à 4, **caractérisé en ce que** lesdits moyens de contrôle (MC) sont implantés dans ledit calculateur (CS) et sont couplés auxdits moyens d'interruption (MI) via une liaison électrique.

6. Dispositif selon l'une des revendications 1 à 5, **caractérisé en ce que** lesdits moyens d'interruption (MI) sont agencés sous la forme d'un relai de type monostable.

7. Dispositif selon l'une des revendications 1 à 5, **caractérisé en ce que** lesdits moyens d'interruption (MI) sont agencés sous la forme d'un relai de type bistable.

8. Système (S) comprenant une batterie (B) propre à fournir une tension d'alimentation à un calculateur (CS), associé à un dispositif de commande à distance (D2), via un circuit d'alimentation (CA), **caractérisé en ce qu'**il comprend en outre un dispositif de contrôle (D1) selon l'une des revendications précédentes.

9. Système selon la revendication 8, **caractérisé en ce qu'**il constitue une motocyclette.

## Patentansprüche

1. Steuereinrichtung (D1) für einen Rechner (CS), der einer Fernsteuereinrichtung (D2) eines Systems (S) zugeordnet ist, daseine Batterie (B) aufweist, die geeignet ist, dem Rechner (CS) über eine Versorgungsschaltung (CA) eine Versorgungsspannung zu liefern, wobei die Einrichtung Unterbrechungsmittel (MI) aufweist, die in der Schaltung in Reihe geschaltet werden können Leistungsversorgung (CA) und in einen offenen bzw. geschlossenen Zust and versetzt werden, der die Spannungsversorgung des Rechners (CS) in Abhängigkeit von einem Wert eines ersten Befehls, der nach einer Betätigung eines Benutzers auf ein Steuerorgan (OC) empfangen wird, das mit dem System (S) ausgerüstet ist, verhindert bzw. ermöglicht, **dadurch gekennzeichnet, dass** die Vorrichtung eigene Steuermittel (MC) enthält, falls Empfang eines zweiten Befehls,der für eine Anforderung zum Abschalten der Versorgung der Versorgungsspannung repräsent at iv ist und aus der Betätigung des Benutzers auf das Steuerorgan (OC) resultiert, zum Erzeugen eines ersten Befehls für die Unt erbrechungsmittel (MI), der einen Wert aufweist, der für eine Anforderung zur Platzierung in dem offenen Zustand repräsent at iv ist.

2. Vorrichtung nach Anspruch 1, **dadurch gekennzeichnet, dass** die Steuermittel (MC) im Falle des Empfangs eines dritten Befehls, der eine Anforderung zur Lieferung der Versorgungsspannung darstellt und aus einer Aktion eines Benutzers auf ein Steuerorgan (OC) des Systems (S) resultiert, geeignet sind, für die Unt erbrechungsmittel (MI) einen ersten Befehl mit einem Wert zu erzeugen, der eine Anforderung darstellt in den geschlossenen Zustand versetzt werden.

3. Vorrichtung nach einem der Ansprüche 1 und 2, **dadurch gekennzeichnet, dass** die Steuermittel (MC) im Falle des Empfangs eines zweiten Befehls, der eine Anforderung zum Anhalt en der Speisespannung darst eilt und aus einer Akt ion eines Benutzers auf ein St euerorgan (OC) des Systems (S) resultiert, geeignet sind, nach einer vorgegebenen Zeitdauer für die Unterbrechungsmittel (MI (NE) eine erste Bestellung, deren Wert für einen Antrag auf Platzierung in dem offenen Zustand repräsent at iv ist.

4. Vorrichtung nach einem der Ansprüche 1 bis 3, **dadurch gekennzeichnet, dass** die Steuermittel (MC) für den Fall, dass das System (S) länger als ein vorgegebener Schwellenwert nicht verwendet wird, geeignet sind, für die Unt erbrechungsmittel (MI) einen ersten Befehl zu erzeugen, der einen Wert aufweist, der für eine Platzierungsanforderung in dem offenen Zustand repräsentativ ist.

5. Vorrichtung nach einem der Ansprüche 1 bis 4, **dadurch gekennzeichnet, dass** die Steuermittel (MC) in den Rechner (CS) implantiert sind und über eine elektrische Verbindung mit den Unterbrechungsmitteln (MI) gekoppelt sind.

6. Vorrichtung nach einem der Ansprüche 1 bis 5, **dadurch gekennzeichnet, dass** die Unterbrechungsmittel (MI) als monostabile Relai ausgebildet sind.

7. Vorrichtung nach einem der Ansprüche 1 bis 5, **dadurch gekennzeichnet, dass** die Unterbrechungsmittel (MI) als bist abile Relai ausgebildet sind.

8. System (S) mit einer Batterie (B), die über eine Stromversorgungsschaltung (CA) eine Versorgungsspannung an einen Rechner (CS) liefern kann, der einer Fernsteuereinrichtung (D2) zugeordnet ist, **dadurch gekennzeichnet, dass** es ferner eine Steuereinrichtung (D1) nach einem der vorhergehenden Ansprüche aufweist.

9. System nach Anspruch 8, **dadurch gekennzeichnet, dass** es ein Motorrad bildet.

## Claims

1. Cont rol device (D1) for a ECU (CS) associated with a remote control device (D2) of a system (S) comprising a battery (B) capable of supplying a volt age to that ECU (CS) via a supply circuit (CA), the device comprising interrupt means (MI) suitable for serial installation in t hat supply circuit (CA) and for placement in open states and closed, respect ively prohibit ing and aut horizing the supply of voltage to that ECU (CS), according to a value of a first order received as a result of a user acting on a cont rol device (OC) fitted to that system (S), charact erized in that the device includes own means of cont rol (MC), in the event of the receipt of a second order represent at ive of a request to stop supply of that supply volt age and result ing the said action of the user on the said control unit (OC), to generate for the said means of int errupt ion (MI) a first order having a value represent at ive of a request for placement in that open state.

2. Device according to claim 1, **characterized in that** the said means of control (MC) are suit able, in the event of receipt of a third order represent ing a request for the supply of said supply volt age and result ing from an action by a user on a cont rol organ (OC) of the said system (S), to generate for the said means of int errupt ion (MI) a first order having a value represent at ive of a request for placement **in that** closed state.

3. Device according to one of Claims 1 and 2, charact erized in that said control means (MC) are suit able, in the event of receipt of a second control which is represent at ive of a request to stop the supply of said supply volt age and which result s from an action by a user on a cont rol member (OC) of said system (S), to be generat ed after a predet ermined time for said int errupt ion means (MI), a first control having a the represent at ive value of an applicat ion for invest ment in the open st at e.

4. Device according to one of Claims 1 to 3, charact erized in t hat said control means (MC) are suitable, in the event of inuse of said system (S) for a period exceeding a predet ermined threshold, for said int errupt ion means (MI) to generate a first control having a value represent at ive of a request for placement in said open state.

5. Device according to one of Claims 1 to 4, charact erized in t hat said control means (MC) are inst ailed in said comput er (CS) and are coupled to said int errupt ion means (MI) via an elect rical connect ion.

6. Device according to one of Claims 1 to 5, charact erized in that said int errupt ion means (MI) are arranged in the form of a monostable type relay.

7. Device according to one of Claims 1 to 5, charact erized in that said int errupt ion means (MI) are arranged in the form of a bist able-t ype relay.

8. Syst em (S) comprising a battery (B) for supplying a supply volt age to a comput er (CS), associat ed wit h a remote cont rol device (D2), via a supply circuit (CA), charact erized in t hat it further comprises a cont rol device (D1) according to one of the preceding claims.

9. System according to Claim 8, charact erized in t hat it const it ut es a mot orcycle.
